# EUROPEAN PATENT SPECIFICATION

(11) **EP 3 728 379 B1**
(45) Date of publication and mention of the grant of the patent: **15.11.2023**
(21) Application number: 18807375.3
(22) Date of filing: 29.11.2018
(51) Int. Cl.: C08G 18/65, C08G 18/76, C09J 175/04, C08L 75/04

(54) **THERMALLY CONDUCTIVE POLYURETHANE ADHESIVE WITH EXCEPTIONAL COMBINATION OF MECHANICAL PROPERTIES**
WÄRMELEITENDER POLYURETHANKLEBSTOFF MIT BESONDERER KOMBINATION VON MECHANISCHEN EIGENSCHAFTEN
ADHÉSIF DE POLYURÉTHANE THERMIQUEMENT CONDUCTEUR COMPORTANT UNE COMBINAISON EXCEPTIONNELLE DE PROPRIÉTÉS MÉCANIQUES

(30) Priority: 20.12.2017 EP 17209083
(43) Date of publication of application: 28.10.2020
(73) Proprietor: Henkel AG & Co. KGaA, 40589 Düsseldorf (DE)
(72) Inventor: ZOELLER, Thomas, 45276 Essen (DE); SCHLINGLOFF, Nicole, 40593 Düsseldorf (DE); ENGELS, Thomas, 40589 Düsseldorf (DE); SCHMITZ, Eric, 41748 Viersen (DE)
(86) International application number: PCT/EP2018/083000
(87) International publication number: WO 2019/120924

(56) References cited:
- EP-A1- 3 035 396
- WO-A1-2015/178416
- WO-A1-2016/139221

## Description

The present invention relates to a thermally conductive adhesive composition having excellent mechanical properties and a method of manufacturing the same. Further, the present invention relates to method of manufacturing an article comprising the thermally conductive adhesive composition and articles obtainable by the described method.

Adhesive which are thermally conductive are employed in several applications where a component has to be fixed upon a structure and where heat has to be deflected from the component. Many applications are therefore in the field of electronics where excess thermal energy generated by the electronic components has to be expelled.

In the course of the ongoing development in the field of electromobility and the use of electric powered vehicles, in particular cars and trucks, it was found that materials with complex requirement specifications are needed. Especially fixing the energy storage device, the "heart" of the electric powered vehicle, has proven to be a challenge, as any adhesives used need to exhibit a thermal conductivity to, for example, deflect any heat generated during charging of the energy storage device while at the same time possessing mechanical and adhesive properties that allow for a safe and long-lasting assembly. In addition, the adhesive used has to have a high isolating resistance to avoid any overflow of electricity from the storage device to the body of the vehicle so as not to endanger any of the passengers.

US 2004/0125565 discloses a thermal interface material comprising a polymer matrix having a thermally conductive first face and an opposite thermally conductive second face and a plurality of carbon nanocapsules incorporated in the polymer matrix.

WO 2009/147117 describes a method of adhering a first component to a second component, comprising the steps of adhering the two components together using a composition comprising a polyurethane and from 20 to 80 wt.-% of a particulate metal, metal salt or metal alloy filler, wherein the polyurethane is a reaction product of a first polyol having a molecular weight of less than 1000, a second polyol having a molecular weight of from 1500 to 10000, at least one polyisocyanate, and at least one curing agent and wherein the particulate metal, metal salt or metal alloy filler has a thermal conductivity of at least 150 W/mK, and curing the composition.

WO 2016/139221 relates to hot melt adhesives with improved thermal conductivity comprising at least one (co)polymer binder and combination of different fillers. The fillers are a mixture of fillers selected from thermally conductive metal components having an aspect ratio of 1 to 10 and flaky metals having an aspect ratio of more than 10.

WO2015178416A1 relates to high-thermoconductivity insulated adhesive sheet. EP3035396A1 relates to heat-conductive adhesive sheet and electronic device using such adhesive sheet.

The solutions presented in the prior art suffer from the drawbacks that usually an increase in thermal conductivity adversely effects the mechanical properties such as tensile modulus, tensile elongation and strength and the isolating resistance.

It is therefore the object of the present invention to overcome the above-mentioned drawbacks by providing an adhesive composition which favorably combines the above-mentioned properties, and which is suitable for use in electric powered vehicles.

It was surprisingly found that the object of the invention can be solved by combining different filler materials exhibiting different thermal conductivities and incorporating such a mixture of fillers into an adhesive composition.

A first object of the invention is therefore an adhesive according to claim 1.

The thermal conductivity is determined according to ISO 22007 (hot disk).

If reference is made herein to a molecular weight of a polymer, this reference refers to the average number weight Mₙ, unless stated otherwise. The number average molecular weight Mₙ of a polymer can, for example, be determined by gel permeation chromatography (GPC) according to DIN 55674 with THF as the eluent. If not stated otherwise, all given molecular weights are those determined by GPC, calibrated with polystyrene standards. The average molecular weight M_{w} can also be determined by GPC, as described for Mₙ.

### Component A

Component A of the inventive adhesive composition comprises a polyol of a specific molecular weight, a chain extender having a specific molecular weight and at least two fillers A1 and A2 which differ with regard to their thermal conductivity, as defined in claim 1.

The polyol used in the present invention is a polyol having a molecular weight Mₙ of 700 to 12000 g/mol, in particular 1000 to 12000 g/mol. Even more preferably, the polyol is a polyether polyol, preferably a polyether diol which preferably comprises primary hydroxyl groups or a mixture of primary and secondary hydroxyl groups. Examples of suitable polyether polyols are polyoxyalkylene polyols such as polyethylene glycol, polypropylene glycol, polytetramethyl glycol und polybutyl glycol. Also, homopolymers or copolymers of the listed polyoxyalkylene polyols as well as mixtures thereof are suitable for the purpose of the present invention. Particularly suitable copolymers are those comprising an adduct of a compound selected from the group consisting of ethylene glycol, propylene glycol, diethylene glycol, propylene glycol, triethylene glycol, 2-ethylhexandiol-1,3-glycerine, trimethylolpropane, trimethylolethane, tris(hydroxyphenyl)propane, triethanolamine and triisopropylamine with at least one compound selected from the group consisting of ethylene oxide, propylene oxide and butylene oxide.

In an especially preferred embodiment, the polyether polyol is an ethylene glycol endcapped polyethylene glycol / polypropylene glycol diol.

In a preferred embodiment of the invention, the polyether polyol is present in component A in an amount of at least 10 wt.-%, preferably 10 wt.-% to 35 wt.-%, based on the total weight of component A. It was surprisingly found that the adhesive properties of the adhesive composition can be improved if the amount of polyether polyol is within in the claimed ranges.

The inventive adhesive composition unexpectedly showed the desired combination of properties, in particular a high thermal conductivity at high volume resistivity in combination with excellent mechanical properties. It was surprisingly found that this set of properties can be achieved by combining filler exhibiting different thermal conductivities with polymer compounds having specific molecular weights.

The first filler, filler A1 exhibits a thermal conductivity of no more than 50 W/mK. In a preferred embodiment, the first thermally conductive filler A1 is selected from the group consisting of metal oxides, metal hydroxides, metal silicates, metal sulfides and combinations thereof.

Suitable metal oxides to be used as fillers A1 are preferably selected from the oxides of metals selected from the group consisting of tin, indium, antimony, aluminum, titanium, iron, magnesium, zinc, rare earth metals, alkaline metals, oxides of Mg, Ca, Sr and Ba, mixed metal oxides and mixtures thereof.

Suitable metal hydroxides to be used as fillers A1 are preferably selected from the hydroxides of metals selected from the group consisting of tin, indium, antimony, aluminum, titanium, iron, magnesium, zinc, rare earth metals, alkaline metals, hydroxides of Mg, Ca, Sr and Ba, mixed metal hydroxides and mixtures thereof.

Suitable metal silicates to be used as fillers A1 are preferably selected from the silicates of metals selected from the group consisting of tin, indium, antimony, aluminum, titanium, iron, magnesium, zinc, rare earth metals, alkaline metals, silicates of Mg, Ca, Sr and Ba, mixed metal silicates and mixtures thereof.

Suitable metal sulfides to be used as fillers A1 are preferably selected from the sulfides of metals selected from the group consisting of tin, indium, antimony, aluminum, titanium, iron, magnesium, zinc, rare earth metals, alkaline metals, sulfides of Mg, Ca, Sr and Ba, mixed metal sulfides and mixtures thereof.

In order to adapt the properties, in particular the thermal conductivity and the dispersibility of the filler, the material employed can be surface modified. In an especially preferred embodiment of the present invention, the filler A1 is therefore surface modified.

The second filler, filler A2, exhibits a thermal conductivity of at least 80 W/mK. In a preferred embodiment, the second filler A2 is selected from the group consisting of graphite, extended graphite, graphene, metal nitrides, metal flakes, metal oxides, carbon fibers, carbon nanotubes and combinations thereof. The metal oxides used as filler A2 preferably differ from the metal oxides used as filler A1.

Suitable metal nitrides to be used as fillers A2 in the present invention are preferably selected from the group of nitrides of metals selected from the group consisting of boron, tin, indium, antimony, aluminum, titanium, iron, magnesium, zinc, rare earth metals, alkaline metals, alkaline earth metals, silver, gold and mixtures and alloys thereof.

Suitable metal flakes to be used as fillers A2 in the present invention are preferably selected from the group consisting of tin, indium, antimony, aluminum, titanium, iron, magnesium, zinc, rare earth metals, alkaline metals, alkaline earth metals, silver, gold, mixtures thereof and alloys thereof.

A suitable metal oxide to be used as filler A2 in the present invention is, e.g. beryllium oxide (BeO).

The technical effect of the invention is achieved by the combination of a filler exhibiting a thermal conductivity of no more than 50 W/mK (A1) and a filler exhibiting a thermal conductivity of at least 80 W/mK (A2) as defined in claim 1. (A2). Suitable fillers A1 can therefore be freely combined with suitable fillers A2.

The filler A1 is present in component A in an amount 30 wt.-% to 80 wt.-%, based on the total weight of component A.

The filler A2 is present in component A in an amount of 1 to 15 wt.-%, based on the total weight of component A.

It was surprisingly found that the thermal conductivity of the adhesive composition could be improved without substantially affecting the volume resistivity if the amount of filler A1 and/or filler A2 was kept within the above ranges.

Component A of the adhesive composition comprises a chain extender. Usually, chain extenders are low molecular weight molecules used to modify the backbone of a given polymer. In a preferred embodiment, the chain extender is a diol, in particular a linear or branched diol with 9 or less carbon atoms. In an especially preferred embodiment, the chain extender is selected from the group consisting of 1,2-propanediol, 1,3-propanediol, 2-methyl-1,3-propanediol, 1,4-butanediol, 1,5-pentanediol, 3-methyl-1,5-prentanediol, 1,6-hexanediol, 1,9-nonanediol, ethylene glycol, polyethylene glycol, neopentyl glycol, polybutylene glycol, cyclohexane-1,2-diol, cyclohexane-1,4-diol, 1,4-bis(hydroxymethyl)cyclohexane and mixtures thereof.

In a further preferred embodiment, the chain extender is present in component A in an amount of at least 0.1 wt.-%, preferably in an amount of 2 to 8 wt.-%, based on the total weight of component A. It was surprisingly found that the mechanical properties of the inventive adhesive composition could be adjusted as needed by varying the amount of chain extender in component A.

In a preferred embodiment, the polyol and the chain extender are present in component A in a weight ratio of 20:1 to 4:1, preferably 10:1 to 5:1.

### Component B

Component B of the inventive adhesive composition comprises at least one NCO-terminated compound. In a preferred embodiment of the invention, component B comprises an aliphatic or aromatic NCO-terminated compound and preferably a mixture of aromatic (poly)isocyanates and/or (poly)isocyanate prepolymers.

In a preferred embodiment, the NCO-terminated compound is selected from the groups consisting of 1,5-Naphthylendiisocyanate (NDI), 2,4'- or 4,4'-Diphenylmethandiisocyanate (MDI), Isomeres of Toluylendiisocyanates (TDI), Methylentriphenyltriisocyanate (MIT), hydrated MDI (H12MDI), Tetramethylxylylendiisocyanate (TMXDI), 1-Isocyanatomethyl-3-isocyanato-1,5,5-trimethylcyclohexane (IPDI), Xylylendiisocyanate (XDI), Hexan-1,6-diisocyanate (HDI), Pentamethylendiisocyanate, Dicyclohexylmethandiisocyanate as well as dimers, trimers, oligomers and polymers of the same.

Suitable (poly)isocyanate prepolymers are reactions products of compounds comprising OH groups and /or NH groups with an excess of polyisocyanates. Suitable prepolymers can for example be obtained by reacting a diol as described above with an excess of isocyanate as described above.

In an especially preferred embodiment, the NCO-terminated compound is a mixture of MDI isomers.

In a preferred embodiment, component B comprises at least 10 wt.-%, more preferably at least 25 wt.-% of the NCO-terminated compound, based on the total weight of component B. In an especially preferred embodiment, component B comprises 10 wt.-% to 90 wt.-%, in particular 25 wt.-% to 40 wt.-%, of the NCO-terminated compound.

The composition according to the invention may further comprise additives. These additives may be used to affect the properties of the composition, for example the mechanical properties and thermal conductivity. Preferably the one or more additives are selected from the group consisting of additional filler, pigments, rheology modifiers, drying agents, flame retardants, curing agents, surface active agents and anti-foaming agents.

In preferred embodiment the amount of additives present in component B is from 0 to 90 wt.-%, preferably 15 to 75 wt.-%, based on the total weight of the component B.

Apart from the thermal conductivity and the mechanical properties of the adhesive composition, other features have also to be taken into account, such as the processability. Especially the curability of the adhesive composition has to be adapted for the respective applications. It was surprisingly found that the mechanical properties of the inventive adhesive composition are advantageously balanced when the mixing ratio of component A to component B is within a certain range. Therefore, an embodiment of the present invention is preferred wherein the mixing ratio by weight of component A to component B is from 10:1 to 1:5, preferably 10:1 to 1:1,1, in particular 5:1 to 1:1.

In order to be processable in industrial application, the adhesive composition needs to have a viscosity that allows easy and precise application. Therefore, an embodiment is preferred wherein the adhesive composition according to the invention has a viscosity of no more than 10000 Pas, preferably no more than 1000 Pas, in particular 30 to 600 Pas, determined at 20°C.

The inventive adhesive composition is thermally conductive. the adhesive composition exhibits a thermal conductivity 1 to 3 W/mK, determined according to ISO 22007. It was surprisingly found that an advantageously balance between thermal conductivity and adhesiveness can be achieved if the thermal conductivity of the adhesive composition is chosen within the above ranges. Further, a thermal conductivity in the above range makes the adhesive composition especially suitable for use in the assemblies of energy storage devices.

A further object of the invention is cured adhesive composition obtainable by curing the adhesive composition according to the invention. Curing of the inventive adhesive composition can be carried out by usual methods well known to the person skilled in the art, such as treatment with radiation, for example UV light, exposure to moisture, induction or thermally.

Commonly, the thermal conductivity of an adhesive composition is achieved at the costs of the adhesive and mechanical properties of the adhesive. It was surprisingly found that the inventive cured adhesive composition not only exhibits excellent thermal conductivity, but also possess advantageous mechanical properties. The inventive cured adhesive composition thus combines thermal conductivity with good mechanical properties. In a preferred embodiment, the inventive cured adhesive composition exhibits a tensile elongation of at least 15%, preferably 20 to 200%, determined according to DIN EN ISO 527 at 23°C. It was surprisingly found that different expansion coefficient of different materials to be bonded could be balanced when the tensile elongation of the cured composition was within the claimed range.

In a further preferred embodiment, the inventive cured adhesive composition exhibits a tensile strength of at least 5 MPa, preferably 5 to 15 MPa, determined according to DIN EN ISO 527 at 23°C. It was surprisingly found that the cured composition showed a favorable cohesive strength when the values were chosen to lie within the claimed range.

According to a further preferred embodiment of the present invention, the cured adhesive composition exhibits a tensile modulus of no more than 500 MPa, preferably 10 to 100 MPa, determined according to DIN EN ISO 527 at 23°C. It was surprisingly found that the cured adhesive showed a flexibility that allows the absorbance of mechanical shocks without notably affecting the tensile strength if the tensile modulus was within the above range.

The cured adhesive composition exhibits a thermal conductivity of at least 1 W/mK, preferably 1 to 3 W/mK, determined according to ISO 22007.

The inventive adhesive composition is, in particular, suitable for use in the assembly of energy storage devices. It is therefore important that the cured adhesive composition does not show any significant electrical conductivity. In a preferred embodiment, the cured adhesive composition therefore possesses a high-volume resistivity, preferably more than 10⁹Ωm, in particular more than 10¹⁰Ωm, determined according to DIN EN 62631-3-1.

A further object of the present invention is a method for the manufacture of the inventive adhesive composition according to claim 10. The method according to the invention comprises the following steps:
a) providing component A and component B; and
b) mixing components A and B to obtain the adhesive composition.

In a preferred embodiment, the method according to the invention comprises the following steps:
a) providing at least on polyol having a molecular weight Mₙ of 700 to 12000 g/mol;
b) providing at least one chain extender having a molecular weight Mₙ of 60 to 600 g/mol;
c) providing at least one thermally conductive filler (A1) exhibiting a thermal conductivity of no more than 50 W/mK, determined according to ISO 22007;
d) providing at least one thermally conductive filler (A2) exhibiting a thermal conductivity of at least 80 W/mK, determined according to ISO 22007;
e) mixing the provided components to obtain component A; wherein 30 to 80 wt.- % of A1 and 1 to 15 wt.-% of A2 is used, the wt.-% based on the total weight of component A, and
f) mixing component A with component B to obtain the adhesive composition.

A further object of the present invention is a method of manufacturing an article using the adhesive composition according to according to claim 11.

In a preferred embodiment, contacting of the first substrate to be bonded with the second substrate to be bonded is carried out by applying pressure.

The method according to the invention is especially suitable for the manufacture of temperature sensitive devices. In a preferred embodiment, the adhesive composition is therefore applied onto the surface of the first substrate at a temperature of 20 to 100°C, preferably 23 to 70°C.

A further object is an article obtainable according to method of manufacture according to claim 11. Preferably, the article according to the invention comprises the cured adhesive composition according to the invention.

The adhesive composition according to the invention can be applied in a variety of technical fields and is especially suitable in the manufacture of heat sensitive objects, in particular objects where heat is generated. Accordingly, a further object of the present invention is the use of the inventive adhesive composition in pipes, preferably cooling coils; in electronic components, preferably light emitting devices, computer devices, mobile phones, tablets, touch screens, automotive technology, hifi systems, and audio systems; in joints between heat pipes and water tanks in solar heated heating; in fuel cell and wind turbines; in the manufacture of computer chips; in light devices; batteries; in housings; in coolers; heat exchanging devices; wires; cables; heating wires; household appliances such as refrigerators and dishwashers; air conditionings; accumulators; transformers; lasers; functional clothing; car seats; medical devices; fire protection; electric motors; planes and trains.

The invention will be illustrated in more detail by way of the following example which is not to be understood as limiting the concept of the invention.

### Example 1:

The following adhesive composition was prepared:

| Component A | Wt.-% |
|---|---|
| Polyol (4000 g/mol) | 23.9 |
| 3-Methyl-1,5-pentanediol | 3.8 |
| Graphite | 2.0 |
| Boron nitride | 5.0 |
| Aluminum oxide | 60.3 |
| Additives | 5.0 |

Modified isocyanate based in 4,4'-MDI was used as component B.

The composition showed a viscosity of 232 Pas, determined at 20°C with Brookfield RVDV-II+P, spindle RV T-F, 10 rpm

The following properties were determined for the cured composition, determined at 23°C, respectively:

| | |
|---|---|
| Tensile modulus Eₜ [MPa] | 51 |
| Tensile strength max. σₘ [MPa] | 8.2 |
| Tensile elongation mach. εb [%] | 68 |
| Thermal conductivity [W/mK]¹ | 1.71 |

| | |
|---|---|
| ¹determined via Hot Disc Method | |

The cured composition showed a volume resistivity of 1.4*10¹⁰Ωm, determined according to DIN EN 62631-3-1 at a temperature of 21.4°C and a relative humidity of 46%.

Compositions comprising only one filler showed a decreased thermal conductivity, as apparent from the comparative examples shown below.

A composition according to Example 1 was prepared wherein graphite and boron nitride were omitted. The comparative composition contained 60.3 wt.-% of aluminum oxide as the filler in component A. The thermal conductivity of the composition after curing was determined to be 0.82 W/mK. Even increasing the amount of aluminum oxide to 67.3 wt.-% in component A only resulted in a slight increase in the thermal conductivity (0.97 W/mK).

Omitting the chain extender resulted in a composition which was not curable.

Comparative Examples wherein the filler A2 was omitted or substituted with the corresponding amount of filler A1 showed a remarkedly reduced thermal conductivity of the cured material. The thermal conductivity did not exceed 0.8 W/mK and 1.0 W/mK, respectively, compared to 1.7 W/mK of a corresponding inventive composition.

The same results were obtained when both fillers A1 and A2 were substituted by the corresponding amount of commonly used fillers such as CaCOs or MgCO₃. The thermal conductivity of the cured material in these cases was found to be only around 0.8 W/mK.

As can be seen, the present invention solves the assigned task as a good thermal conductivity can be achieved in combination with excellent mechanical properties.

## Claims

1. Adhesive composition comprising a first component (A) and a second component (B),
wherein component (A) comprises
a-1) at least one polyol having a molecular weight Mₙ of 700 to 12000 g/mol;
a-2) chain extender having a molecular weight Mₙ of 60 to 600 g/mol;
a-3) 30 to 80 wt.-% of at least one thermally conductive filler A1 exhibiting a thermal conductivity of no more than 50 W/mK, determined according to ISO 22007; and
a-4) 1 to 15 wt.-% of at least one thermally conductive filler A2 exhibiting a thermal conductivity of at least 80 W/mK, determined according to ISO 22007; and
wherein component (B) comprises at least one NCO-terminated compound, wherein the wt.-% are based on the total weight of the component A and
wherein the adhesive composition exhibits a thermal conductivity of 1 to 3 W/mK, determined according to ISO 22007.

2. Adhesive composition according to claim 1, wherein the conductive filler A1 is selected from the group consisting of metal oxides, metal hydroxides, metal silicates, metal sulfides and combinations thereof.

3. Adhesive composition according to at least one of claims 1 and 2, wherein the conductive filler A2 is selected from the group of graphite, extended graphite, graphene, metal nitrides, metal flakes, metal oxides, carbon fibers, carbon nanotubes and combinations thereof.

4. Adhesive composition according to any of claims 1 to 3, wherein the ratio by mass of components A and B is 10:1 to 1:5.

5. Adhesive composition according to any of claims 1 to 4, wherein the polyol is a polyether polyol, preferably a polyether diol, preferably comprising primary hydroxyl groups or a mixture of primary and secondary hydroxyl groups.

6. Adhesive composition according to any of claims 1 to 5, wherein the chain extender is a diol, preferably selected from the group consisting of 1,2-propanediol, 1,3-propanediol, 2-methyl-1,3-propanediol, 1,4-butanediol, 1,5-pentanediol, 3-methyl-1,5-prentanediol, 1,6-hexanediol, 1,9-nonanediol, ethylene glycol, polyethylene glycol, neopentyl glycol, polybutylene glycol, cyclohexane-1,2-diol, cyclohexane-1,4-diol, 1,4-bis(hydroxymethyl)cyclohexane and mixtures thereof.

7. Adhesive composition according to any of claims 1 to 6, wherein component B comprises an aliphatic or aromatic NCO-terminated compound, preferably a mixture of aromatic (poly)isocyanates and/or aromatic (poly)isocyanate prepolymers, more preferably a mixture of MDI isomers.

8. Cured adhesive composition obtainable by curing an adhesive composition according to any of claims 1 to 7.

9. Cured adhesive composition according to claim 8, wherein the composition exhibits a thermal conductivity of 1 to 3 W/mK, determined according to ISO 22007.

10. Method for the manufacturing of an adhesive composition according to any of claims 1 to 7, the method comprising
a) providing component A and component B; and
b) mixing components A and B to obtain the adhesive composition.

11. Method of manufacturing an article comprising at least two bonded substrates, the method comprising the following steps:
i) applying the adhesive composition according to any of claims 1 to 7 onto the surface of a first substrate to be bonded; and
ii) bringing the surface of the first substrate to be bonded comprising the adhesive composition into contact with a second substrate to be bonded.

12. Article obtainable according to the method claim 11.

13. Use of an adhesive composition according to any of claims 1 to 7 in pipes, preferably cooling coils; in electronic components, preferably light emitting devices, computer devices, mobile phones, tablets, touch screens, automotive technology, hifi systems, and audio systems; in joints between heat pipes and water tanks in solar heated heating; in fuel cell and wind turbines; in the manufacture of computer chips; in light devices; batteries; in housings; in coolers; heat exchanging devices; wires; cables; heating wires; household appliances such as refrigerators and dishwashers; air conditionings; accumulators; transformers; lasers; functional clothing; car seats; medical devices; fire protection; electric motors; planes and trains.

## Patentansprüche

1. Klebstoffzusammensetzung, umfassend eine erste Komponente (A) und eine zweite Komponente (B), wobei die Komponente (A) umfasst
a-1) mindestens ein Polyol, das ein Molekulargewicht Mₙ von 700 bis 12000 g/mol aufweist;
a-2) Kettenverlängerer, das ein Molekulargewicht Mₙ von 60 bis 600 g/mol aufweist;
a-3) zu 30 bis 80 Gew.-% mindestens einen thermisch leitfähigen Füllstoff A1, der eine Wärmeleitfähigkeit von nicht mehr als 50 W/mK, bestimmt nach ISO 22007, aufweist; und
a-4) zu 1 bis 15 Gew.-% mindestens einen thermisch leitfähigen Füllstoff A2, der eine Wärmeleitfähigkeit von mindestens 80 W/mK, bestimmt nach ISO 22007, aufweist; und
wobei die Komponente (B) mindestens eine NCO-terminierte Verbindung umfasst, wobei die Gew.-% auf dem Gesamtgewicht der Komponente A basieren und
wobei die Klebstoffzusammensetzung eine Wärmeleitfähigkeit von 1 bis 3 W/mK aufweist, bestimmt nach ISO 22007.

2. Klebstoffzusammensetzung nach Anspruch 1, wobei der leitfähige Füllstoff A1 aus der Gruppe ausgewählt ist, bestehend aus Metalloxiden, Metallhydroxiden, Metallsilicaten, Metallsulfiden und Kombinationen davon.

3. Klebstoffzusammensetzung nach mindestens einem der Ansprüche 1 und 2, wobei der leitfähige Füllstoff A2 aus der Gruppe von Graphit, erweitertem Graphit, Graphen, Metallnitriden, Metallflocken, Metalloxiden, Kohlefasern, Kohlenstoffnanoröhren und Kombinationen davon ausgewählt ist.

4. Klebstoffzusammensetzung nach einem der Ansprüche 1 bis 3, wobei das Masseverhältnis der Komponenten A und B 10 : 1 bis 1 : 5 beträgt.

5. Klebstoffzusammensetzung nach einem der Ansprüche 1 bis 4, wobei das Polyol ein Polyetherpolyol, vorzugsweise ein Polyetherdiol, ist, vorzugsweise umfassend primäre Hydroxylgruppen oder ein Gemisch aus primären und sekundären Hydroxylgruppen.

6. Klebstoffzusammensetzung nach einem der Ansprüche 1 bis 5, wobei der Kettenverlängerer ein Diol ist, das vorzugsweise aus der Gruppe ausgewählt ist, bestehend aus 1,2-Propandiol, 1,3-Propandiol, 2-Methyl-1,3-propandiol, 1,4-Butandiol, 1,5-Pentandiol, 3-Methyl-1,5-prentandiol, 1,6-Hexandiol, 1,9-Nonandiol, Ethylenglykol, Polyethylenglykol, Neopentylglykol, Polybutylenglykol, Cyclohexan-1,2-diol, Cyclohexan-1,4-diol, 1,4-bis(Hydroxymethyl)cyclohexan und Gemischen davon.

7. Klebstoffzusammensetzung nach einem der Ansprüche 1 bis 6, wobei Komponente B eine aliphatische oder aromatische NCO-terminierte Verbindung, vorzugsweise ein Gemisch aus aromatischen (poly)lsocyanaten und/oder aromatischen (poly)lsocyanatpräpolymeren, stärker bevorzugt ein Gemisch von MDI-Isomeren, umfasst.

8. Gehärtete Klebstoffzusammensetzung, die durch Härten einer Klebstoffzusammensetzung nach einem der Ansprüche 1 bis 7 erhältlich ist.

9. Gehärtete Klebstoffzusammensetzung nach Anspruch 8, wobei die Zusammensetzung eine Wärmeleitfähigkeit von 1 bis 3 W/mK, bestimmt nach ISO 22007, aufweist.

10. Verfahren für die Herstellung einer Klebstoffzusammensetzung nach einem der Ansprüche 1 bis 7, das Verfahren umfassend
a) Bereitstellen von Komponente A und Komponente B; und
b) Mischen der Komponenten A und B, um die Klebstoffzusammensetzung zu erhalten.

11. Verfahren zum Herstellen eines Erzeugnisses, umfassend mindestens zwei gebundene Substrate, das Verfahren umfassend die folgenden Schritte:
i) Aufbringen der Klebstoffzusammensetzung nach einem der Ansprüche 1 bis 7 auf die Oberfläche eines ersten Substrats, das gebunden werden soll; und
ii) Inberührungbringen der Oberfläche des ersten Substrats, das gebunden werden soll, umfassend die Klebstoffzusammensetzung, mit einem zweiten Substrat, das gebunden werden soll.

12. Erzeugnis, das nach dem Verfahrensanspruch 11 erhältlich ist.

13. Verwendung einer Klebstoffzusammensetzung nach einem der Ansprüche 1 bis 7 in Rohrleitungen, vorzugsweise Kühlschlangen; in elektronischen Komponenten, vorzugsweise lichtemittierenden Vorrichtungen, Computervorrichtungen, Mobiltelefonen, Tablets, Touchscreens, Automobiltechnik, Hifi-Systemen und Audiosystemen; in Gelenken zwischen Wärmerohren und Wassertanks in solarerwärmter Heizung; in Brennstoffzellen und Windturbinen; bei der Herstellung von Computerchips; in Lichtvorrichtungen; Batterien; in Gehäusen; in Kühlern; Wärmetauschervorrichtungen; Drähten; Kabeln; Heizdrähten; Haushaltsgeräten wie Kühlschränken und Geschirrspülmaschinen; Klimaanlagen; Akkumulatoren; Transformatoren; Lasern; Funktionskleidung; Autositzen; medizinische Vorrichtungen; Feuerschutz; Elektromotoren; Ebenen und Zügen.

## Revendications

1. Composition adhésive comprenant un premier composant (A) et un second composant (B), dans laquelle le composant (A) comprend
a-1) au moins un polyol ayant une masse moléculaire Mₙ comprise entre 700 et 12000 g/mol ;
a-2) un agent d'allongement de chaîne ayant une masse moléculaire Mₙ comprise entre 60 et 600 g/mol ;
a-3) 30 à 80 % en poids d'au moins une charge thermoconductrice A1 présentant une conductivité thermique d'au plus 50 W/mK, déterminée selon la norme ISO 22007 ; et
a-4) 1 à 15 % en poids d'au moins une charge thermoconductrice A2 présentant une conductivité thermique d'au moins 80 W/mK, déterminée selon la norme ISO 22007 ; et
dans laquelle le composant (B) comprend au moins un composé à terminaison NCO, dans lequel les pourcentages en poids sont en fonction du poids total du composant A et
dans laquelle la composition adhésive présente une conductivité thermique de 1 à 3 W/mK, déterminée selon la norme ISO 22007.

2. Composition adhésive selon la revendication 1, dans laquelle la charge conductrice A1 est choisie parmi le groupe constitué d'oxydes métalliques, d'hydroxydes métalliques, de silicates métalliques, de sulfures métalliques et des combinaisons de ceux-ci.

3. Composition adhésive selon au moins l'une des revendications 1 et 2, dans laquelle la charge conductrice A2 est choisie parmi le groupe du graphite, du graphite étendu, du graphène, des nitrures métalliques, des paillettes métalliques, des oxydes métalliques, des fibres de carbone, des nanotubes de carbone et des combinaisons de ceux-ci.

4. Composition adhésive selon l'une quelconque des revendications 1 à 3, dans laquelle le rapport en masse des composants A et B est compris entre 10:1 et 1:5.

5. Composition adhésive selon l'une quelconque des revendications 1 à 4, dans laquelle le polyol est un polyéther polyol, de préférence un polyéther diol, comprenant de préférence des groupes hydroxyle primaires ou un mélange de groupes hydroxyles primaires et secondaires.

6. Composition adhésive selon l'une quelconque des revendications 1 à 5, dans laquelle l'agent d'allongement de chaîne est un diol, choisi de préférence parmi le groupe constitué de 1,2-propanediol, de 1,3- propanediol, de 2-méthyl-1,3-propanediol, de 1,4-butanediol, de 1,5-pentanediol, de 3-méthyl-1,5-prentanediol, de 1,6-hexanediol, 1,9-nonanediol, d'éthylène glycol, de polyéthylène glycol, de néopentylglycol, de polybutylène glycol, de cyclohexane-1,2-diol, de cyclohexane-1,4-diol, de 1,4- bis (hydroxyméthyl) cyclohexane et des mélanges de ceux-ci.

7. Composition adhésive selon l'une quelconque des revendications 1 à 6, dans laquelle le composant B comprend un composé aliphatique ou aromatique à terminaison NCO, de préférence un mélange de (poly)isocyanates aromatiques et/ou de prépolymères de (poly)isocyanates aromatiques, plus préférablement un mélange d'isomères de MDI.

8. Composition adhésive durcie pouvant être obtenue en durcissant la composition adhésive selon l'une quelconque des revendications 1 à 7.

9. Composition adhésive durcie selon la revendication 8, dans laquelle la composition présente une conductivité thermique de 1 à 3 W/mK, déterminée selon la norme ISO 22007.

10. Procédé permettant de fabriquer une composition adhésive selon l'une quelconque des revendications 1 à 7, le procédé comprenant
a) la fourniture du composant A et du composant B ; et
b) le mélange de composants A et B pour obtenir la composition adhésive.

11. Procédé de fabrication d'un article comprenant au moins deux substrats liés, le procédé comprenant les étapes suivantes :
i) l'application de la composition adhésive selon l'une quelconque des revendications 1 à 7 sur la surface d'un premier substrat à lier ; et
ii) la mise en contact de la surface du premier substrat à lier comprenant la composition adhésive avec un deuxième substrat à lier.

12. Article pouvant être obtenu selon le procédé de la revendication 11.

13. Utilisation d'une composition adhésive selon l'une quelconque des revendications 1 à 7 dans des tuyaux, de préférence des serpentins de refroidissement ; dans des composants électroniques, de préférence des dispositifs électroluminescents, des dispositifs informatiques, des téléphones mobiles, des tablettes, des écrans tactiles, des technologies automobiles, des systèmes hifi et des systèmes audio ; dans les joints entre les caloducs et les réservoirs d'eau dans les systèmes de chauffage solaire ; dans les piles à combustible et les turbines éoliennes ; dans la fabrication de puces informatiques ; dans des dispositifs lumineux ; dans des batteries ; dans des logements ; des refroidisseurs ; des dispositifs d'échange de chaleur ; des fils ; des câbles ; des fils chauffants ; des appareils ménagers tels que les réfrigérateurs et les lave-vaisselle ; des climatiseurs ; des accumulateurs ; des transformateurs ; des lasers ; des vêtements fonctionnels ; des sièges auto ; des dispositifs médicaux ; des protections contre le feu ; des moteurs électriques ; des avions et des trains.
